## Europäisches Patentamt

## European Patent Office

## Office européen des brevets

(19)

(11) Veröffentlichungsnummer: **0 071 081**
**A1**

(12) # EUROPÄISCHE PATENTANMELDUNG

(21) Anmeldenummer: **82106296.5**

(22) Anmeldetag: **14.07.82**

(51) Int. Cl.$^3$: **C 08 G 65/44**

(30) Priorität: **23.07.81 DE 3129083**

(43) Veröffentlichungstag der Anmeldung:
**09.02.83 Patentblatt 83/6**

(84) Benannte Vertragsstaaten:
**AT BE DE FR GB NL**

(71) Anmelder: **BASF Aktiengesellschaft
Carl-Bosch-Strasse 38
D-6700 Ludwigshafen(DE)**

(72) Erfinder: **Naarmann, Herbert, Dr.
Haardtblick 15
D-6719 Wattenheim(DE)**

(72) Erfinder: **Hambrecht, Juergen, Dr.
Werderstrasse 30
D-6900 Heidelberg(DE)**

(72) Erfinder: **Rieber, Norbert, Dr.
Liebfrauenstrasse 1C
D-6800 Mannheim(DE)**

(54) Verfahren zur Herstellung von Polyphenylenäthern.

(57) Die Erfindung betrifft ein Verfahren zur Herstellung hochmolekularer Polyphenylenäther aus einwertigen Phenolen, die in den beiden ortho-Stellungen oder zusätzlich in einer meta-Position, nicht aber in der para-Stellung Alkylsubstituenten aufweisen, durch oxidative Kupplungsreaktion mit Sauerstoff bei Temperaturen zwischen 10 und 25°C, in Anwesenheit eines Katalysatorkomplexes aus einem Kupfersalz und einem N-substituierten Imidazol in Gegenwart eines aromatischen $C_8$- bis $C_{10}$-Kohlenwasserstoffs als Lösungsmittel.

Bevorzugt verwendet wird als Imidazol N-Methyl-, N-Äthyl-, N-Isopropyl-, N-n-Butyl-, N-Cyclohexyl-, N-Octyl- oder N-Phenylimidazol, und zwar zweckmäßig in Mengen von 0,5 bis 5 Gewichtsprozent.

BASF Aktiengesellschaft          O.Z.0050/035298

Verfahren zur Herstellung von Polyphenylenäthern

Die Erfindung betrifft ein Verfahren zur Herstellung hochmolekularer Polyphenylenäthern aus einwertigen Phenolen, die in den beiden ortho-Stellungen oder zusätzlich in einer meta-Position, nicht aber in der para-Stellung Alkylsubstituenten aufweisen durch oxidative Kupplungsreaktion mit Sauerstoff bei Temperaturen zwischen 10 und 25°C in Anwesenheit eines Katalysatorkomplexes aus einem Kupfersalz und einem organischen Amin in Gegenwart eines aromatischen $C_8$- bis $C_{10}$-Kohlenwasserstoffs als Lösungsmittel im Bereich von 1:1 bis 20:1 Gewichtsteilen, bezogen auf das monomere Phenol und gegebenenfalls eines Aktivators.

Bei derartigen Verfahren zur Selbstkondensation einwertiger Phenole durch Einwirken von Sauerstoff sind Katalysatorsysteme erforderlich, die in Gegenwart eines Lösungsmittels die oxidative Kupplungsreaktion in Gang bringen.

Es ist vorgeschlagen, zur Erfüllung dieser Erfordernisse in aromatischen Lösungsmitteln wie $C_8$- bis $C_{10}$-Kohlenwasserstoffen die Reaktion in Anwesenheit eines Katalysatorkomplexes aus Kupfer-II-Salzen und einem geradkettigen aliphatischen Amin oder einem cyclischen Amin durchzuführen (vgl. EP-Anm. 81/106610). Nach Beendigung der Reaktion wird die das Polymere enthaltende Aromatenlösung mit etwa der 10-fachen Menge Methanol versetzt, das ausgefällte Polymere abfiltriert, mit Methanol gewaschen und bei 70°C im Vakuum getrocknet.

Dieser bisher ausgeübte Reaktionsweg weist den Nachteil auf, daß bei der oxidierenden Polykondensation bei der Herstellung höhermolekularer Polykondensate zu lange Reaktionszeiten erforderlich sind.

Fre/P

Der Erfindung lag die Aufgabe zugrunde, bei Verwendung von Rohmonomeren durch Abändern der Aminkomponente im Katalysator bei relativ geringen Reaktionszeiten Polymere mit vergleichsweise hohen Intrinsic-Viskositäten zu erhalten.

Diese Aufgabe wird erfindungsgemäß dadurch gelöst, daß als Amin ein N-substituiertes Imidazol verwendet wird. Bevorzugte Amine sind N-Methyl-, N-Äthyl-, N-Isopropyl-, N-n-Butyl-, N-Cyclohexyl-, N-Octyl- oder N-Phenylimidazol, nach besonders bevorzugter Verfahrensweise wird das N-substituierte Imidazol in Mengen von 0,5 bis 5 Gewichtsprozent, bezogen auf das monomere Phenol, verwendet.

Unter hochmolekularen Polyphenylenäthern werden die durch oxidative Kupplung von 2,6-Dialkylphenolen zu einer Kette alkylsubstituierter, in para-Stellung durch Sauerstoffatome ätherartig gebundene Benzolringe verstanden. Die Polymeren weisen Molekulargewichte von 5 000 bis 30 000, bevorzugt 10 000 bis 25 000, bestimmt nach der in "Macromolecular Syntheses" 1 (1978), Seite 83 beschriebenen Methode, auf. Hochmolekulare Polyphenylenäther, auch Poly(phenylenoxide) genannt, sind an sich aus der Literatur seit längerem bekannt (vgl. z.B. US-PS 3,661,848; US-PS 3,219,625 oder US-PS 3,378,505), so daß sich hier eine weitere Beschreibung erübrigt.

Die zur Herstellung der hochmolekularen Polyphenylenäther verwendeten einwertigen Phenole, die in den beiden ortho-Stellungen, nicht aber in der para-Stellung Alkylsubstituenten aufweisen, sind übliche Phenole wie 2,6-Dimethylphenol, 2,6-Diäthylphenol, 2-Methyl-6-äthylphenyl, 2-Methyl-6-propylphenol, 2,6-Dibutylphenol, 2,3,6-Trimethylphenol sowie Gemische dieser Phenole.

Zur Ausführung der Polykondensation wird üblicherweise Sauerstoff in die 10 bis 25, vorzugsweise 15 bis 20$^{\circ}$C warme Lösung des Monomeren in Gegenwart eines Katalysatorkomplexes eingeleitet. Die Sauerstoffdurchflußgeschwindigkeit ist im wesentlichen die gleiche, wie sie in den US-Patentschriften 3,306,874 und 3,306,875 beschrieben ist.

Bei dem für die Polykondensation bekannten Katalysatorkomplex handelt es sich um eine Kombination aus einem Amin, z.B. Dibutylamin, Diäthylamin, Picolin, Chinolin, Pyridinbasen, Triisopropylamin, Dimethylisopropanolamin, Triäthanolamin, Triisopropanolamin oder Diisopropanolamin mit einem Kupfersalz, wie Kupfer-I-Bromid, Kupfer-I-Chlorid, Kupfer-I-Jodid, Kupfer-II-Acetat, Kupfer-II-Propionat, Kupfer-II-Acetessigester oder Kupfer-II-Acetylacetonat. Ein bevorzugter Bereich bei der Menge der eingesetzten Amine liegt üblicherweise von 2,0 bis 25,0 Mol pro 100 Mol des Monomeren, die Konzentration der Amine kann aber in der Reaktionsmischung innerhalb weiter Grenzen variieren, zweckmäßig sind jedoch niedere Konzentrationen. Die Konzentration der Kupfersalze wird gering gehalten und variiert vorzugsweise von 0,2 bis 2,5 Mol pro 100 Mol des Monomeren.

Der Anteil des Lösungsmittels liegt üblicherweise im Bereich von 1:1 bis 20:1, d.h. maximal bis zu einem Überschuß des 20-fachen am Lösungsmittel, bezogen auf das Monomere. Nach anmeldungsgemäßen Verfahren soll als Lösungsmittel ein aromatischer $C_8$- bis $C_{10}$-Kohlenwasserstoff verwendet werden. Geeignete Kohlenwasserstoffe sind insbesondere Ethylbenzol, Xylol, Diethylbenzol oder deren Gemische, wobei vorzugsweise Ethylbenzol verwendet wird. Die Lösungsmittel werden bevorzugt im Bereich von 1:1 bis 10:1 Gewichtsteilen, bezogen auf das monomere Phenol, eingesetzt.

Darüber hinaus kann die Reaktionsmischung einen Aktivator wie ein Diarylguanidin oder ein Diarylformamidin enthalten (vgl. US-PS 3 544 515).

Nach erfindungsgemäßem Verfahren soll als Amin ein N-substituiertes Imidazol verwendet werden. Bevorzugte Amine sind N-Methyl-, N-Äthyl-, N-Isopropyl-, N-n-Butyl, N-Cyclohexyl-, N-Octyl- oder N-Phenylimidazol. Die N-substituierten Imidazole werden zweckmäßig in Mengen von 0,5 bis 5, bevorzugt 0,8 bis 1,5 Gewichtsprozent, bezogen auf das eingesetzte Phenol, verwendet.

Die mit der Erfindung erzielten Vorteile bestehen insbesondere darin, daß man ein Polymerisat mit hoher Intrinsic-Viskosität bei Verwendung von Rohmonomeren erhält. Bei dieser Polymerisationstechnik wird außerdem das Polymere in Ausbeuten von größer als 90 Gewichtsprozent, bezogen auf das eingesetzte Monomer, erhalten.

Wird z.B. ein Rohprodukt aus 2,6-Dimethylphenol unter vergleichbaren Bedingungen, d.h. in Ethylbenzol gelöst, eingesetzt, aber lediglich Dibutylamin gegen N-n-Butylimidazol ausgetauscht, so wird ein Polymeres mit einer Intrinsic-Viskosität $[\eta]$ von 1,076 dl/g erhalten. Bei Verwendung von Ethylbenzol und Dibutylamin wird dagegen nur maximal eine Intrinsic-Viskosität $[\eta]$ von 0,806 dl/g erhalten.

Dieses Verhalten beweist, daß der Übergang zu N-substituierten Imidazolen als Aminkomponenten unerwartet vorteilhaft ist und den Einsatz von Rohprodukten aus 2,6-Dimethylphenol erlaubt.

In den Beispielen wird gezeigt, daß neben dem erfindungsgemäßen Vorteil der höheren Intrinsic-Viskosität des Polymeren auch den Vorteil der kürzeren Polymerisationszeit, sowie eine deutliche Absenkung von Verunreinigungen wie Tetramethyldiphenochinon auftritt.

Vergleichsbeispiel
gemäß DE-OS 3 033 813

Herstellung von Poly(2,6-dimethyl-1,4-phenylen)-äther

Zu einer Vorlage von 1,3 g Cu-I-Bromid und 33 g Dibutylamin werden 2 g 2,6-Dimethylphenol gegeben und bei 20°C 5 Minuten unter Einleiten von Sauerstoff gerührt, dann wird im Verlauf von 30 Minuten eine Lösung von 204 g 2,6-Dimethylphenol in 1 400 ml Ethylbenzol eindosiert, anschließend wird noch 1 Stunde bei 20°C gerührt. Die Reaktion wird in Gegenwart von 30 Liter/Stunde Sauerstoff durchgeführt.

Nach Beendigung der Reaktion wird das Polymerisat mit 10 l Methanol gefällt. Das erhaltene Polymerisat hat nach dem Trocknen eine Intrinsic Viskosität $[\eta]$ von 0,8 dl/g. Die Ausbeute an Polymeren lag bei 90 % (bezogen auf das eingesetzte Monomere). Analyse: Cu-Gehalt: 4 ppm, N-Gehalt: 0,1 Gew.-%.

Beispiel 1

Wird wie oben beschrieben gearbeitet, jedoch Dibutylamin durch N-n-Butylimidazol ersetzt, so wird bei gleicher Gesamtreaktionszeit wie gemäß Vergleichsbeispiel eine In-trinsic-Viskosität von $[\eta]$ = 1,076 dl/g erhalten.

| Beispiel Nr. | Cu-Salz g wasserfrei | | Lösungsmittel | Amin Art und Menge in g | | dl/g [η] |
|---|---|---|---|---|---|---|
| 2 | Cu-I-Br | 1,3 | Ethylbenzol | N-Methylimidazol | 20 | 1,032 |
| 3 | Cu-I-Br | 1,3 | Xylol | " | 25 | 1,035 |
| 4 | Cu-I-Br | 1,3 | Xylol | " | 30 | 1,042 |
| 5 | Cu-I-Br | 1,3 | Xylol | " | 35 | 1,049 |
| 6 | Cu-I-Br | 1,3 | Xylol | " | 40 | 1,055 |
| 7 | Cu-I-Cl | 1,3 | Ethylbenzol | N-Äthylimidazol | 30 | 1,062 |
| 8 | Cu-I-J | 1,3 | Ethylbenzol | " | 30 | 1,020 |
| 9 | Cu-I-Br | 2,6 | Ethylbenzol | " | 30 | 1,072 |
| 10 | Cu-I-Br | 2,6 | Ethylbenzol | N-n-Butylimidazol | 40 | 1,079 |
| 11 | Cu-II-Br | 1,3 | Ethylbenzol | " | 25 | 1,070 |
| 12 | Cu-II-Acetat | 1,5 | Ethylbenzol | N-Isopropylimidazol | 25 | 1,010 |
| 13 | Cu-II-Propionat | 1,5 | Ethylbenzol | " | 25 | 1,001 |
| 14 | Cu-I-Acetessigester | 1,5 | Ethylbenzol | N-Cyclohexylimidazol | 25 | 0,931 |
| 15 | Cu-II-Acetylacetonat | 1,5 | Ethylbenzol | N-Phenylimidazol | 25 | 0,725 |
| 16 | Cu-I-Br | 1,3 | Ethylbenzol | N-Octylimidazol | 33 | 1,025 |

Bei allen Versuchen betrug die Gesamtreaktionszeit 1 1/2 Stunden.

# Patentansprüche

1. Verfahren zur Herstellung hochmolekularer Polyphenylenäther aus einwertigen Phenolen, die in den beiden ortho-Stellungen oder zusätzlich in einer meta-Position, nicht aber in der para-Stellung Alkylsubstituenten aufweisen, durch oxidative Kupplungsreaktion mit Sauerstoff bei Temperaturen zwischen 10 und 25°C, in Anwesenheit eines Katalysatorkomplexes aus einem Kupfersalz und einem organischen Amin in Gegenwart eines aromatischen $C_8$- bis $C_{10}$-Kohlenwasserstoffs als Lösungsmittel im Bereich von 1:1 bis 20:1 Gewichtsteilen, bezogen auf das monomere Phenol, und gegebenenfalls eines Aktivators, dadurch gekennzeichnet, daß als Amin ein N-substituiertes Imidazol verwendet wird.

2. Verfahren nach Anspruch 1, dadurch gekennzeichnet, daß das Amin N-Methyl-, N-Äthyl-, N-Isopropyl-, N-n-Butyl-, N-Cyclohexyl-, N-Octyl- oder N-Phenylimidazol ist.

3. Verfahren nach Anspruch 1, dadurch gekennzeichnet, daß das N-substituierte Imidazol in Mengen von 0,5 bis 5 Gewichtsprozent, bezogen auf das eingesetzte Phenol, verwendet wird.

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | US-A-3 306 875  (A.S. HAY) <br> * Ansprüche; Spalte 3, Zeilen 57-75; Spalte 5, Zeilen 34-35; Spalte 10, Zeilen 27-37 * <br><br> --- | 1-3 | C 08 G  65/44 |
| Y | GB-A-1 105 948  (GENERAL ELECTRIC) <br> * Ansprüche; Seite 3, Zeilen 8-23; Seite 5, Zeilen 5-8 * <br><br> ----- | 1-3 | |

| RECHERCHIERTE SACHGEBIETE (Int. Cl. 3) |
|---|
| C 08 G |

Der vorliegende Recherchenbericht wurde für alle Patentansprüche erstellt.

| Recherchenort | Abschlußdatum der Recherche | Prüfer |
|---|---|---|
| DEN HAAG | 29-09-1982 | DERAEDT G. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

 

& : Mitglied der gleichen Patentfamilie, übereinstimmendes Dokument

EPA Form 1503 03.82